# EUROPEAN PATENT APPLICATION

(11) **EP 4 683 100 A1**
(43) Date of publication of application: **21.01.2026**
(21) Application number: 25186656.2
(22) Date of filing: 01.07.2025
(51) Int. Cl.: H01M 50/533, H01M 50/55, H01M 50/567

(54) **SECONDARY BATTERY, BATTERY PACK AND ELECTRONIC DEVICE**

(30) Priority: 17.07.2024 CN 202421701707 U
(71) Applicant: AESC Japan Ltd., Yokohama-Shi, Kanagawa 220-0012 (JP)
(72) Inventor: SUN, Wei, Jiangyin City, Wuxi City, 214443 (CN); ZHANG, Xiaobing, Jiangyin City, Wuxi City, 214443 (CN); XU, Yonggang, Jiangyin City, Wuxi City, 214443 (CN)
(74) Representative: Becker, Eberhard

(57) **Abstract**

A secondary battery (100), a battery pack (1002), and an electronic device (1000) is provided. The secondary battery (100) includes a top cover (172), a terminal post (50) disposed on the top cover (172), an electrode assembly (120), and a rivet (10). The electrode assembly (120) includes a cell body (124) and a tab (122) protruding from the cell body (124). A riveting hole (1220) is provided on the tab (122). The rivet (10) is connected to the terminal post (50) and penetrates through the riveting hole (1220) to rivet the terminal post (50) and the tab (122).

## Description

### BACKGROUND

### Technical Field

The disclosure relates to a secondary battery, a battery pack, and an electronic device.

### Description of Related Art

For decades, with the rise of new energy vehicles and electrochemical energy storage stations, the development of lithium-ion batteries has received much attention. In the production process of lithium-ion batteries, the electrode assembly/jelly roll (JR) that has been wound or stacked and hot-pressed needs to be connected to the terminal post on the top cover plate. At present, in most batteries, riveting, screwing, or ultrasonic welding are used to connect the tabs of the electrode assembly with the transfer sheet, and the terminal post is then connected to the transfer sheet through laser welding. In some batteries, the use of transfer sheets is canceled to improve space utilization and energy density, and the tabs are directly connected to the terminal post through laser welding.

### SUMMARY

In view of the problems found in the related art, the disclosure aims to provide a secondary battery, a battery pack, and an electronic device to improve the energy density and safety of the secondary battery.

To achieve the above, the disclosure provides a secondary battery including a top cover, a terminal post disposed on the top cover, an electrode assembly, and a rivet. The terminal assembly includes a cell body and a tab protruding from the cell body. A riveting hole is provided on the tab. The rivet is connected to the terminal post and penetrates through the riveting hole to rivet the terminal post and the tab.

In some embodiments, the rivet is disposed on a side of the terminal post facing the electrode assembly.

In some embodiments, the terminal post and the rivet are an integrally formed member.

In some embodiments, the terminal post includes a positive terminal post and a negative terminal post, and the tab includes a positive tab and a negative tab. The positive terminal post is riveted to the positive tab through the rivet, and the negative terminal post is riveted to the negative tab through another rivet.

In some embodiments, the secondary battery includes one or more electrode assemblies. The terminal post is connected to the corresponding rivet, thereby connecting to the corresponding tab of the one or more electrode assemblies.

In some embodiments, the rivet is a solid structure or a hollow structure, and in a direction projecting from the electrode assembly to the terminal post, a shape of an outer boundary of the rivet is one or a combination of circle, ellipse, square, rectangle, diamond, and triangle.

In some embodiments, an edge region of the rivet is welded together with the terminal post and the tab.

In some embodiments, the electrode assembly is a wound or stacked electrode assembly.

The embodiments of the disclosure further provide a battery pack including the secondary battery according to any one of the above.

The embodiments of the disclosure further provide an electronic device including the battery pack.

The beneficial technical effects provided by the disclosure include the following.

In the embodiments of the disclosure, the rivet is used to rivet the tab and the terminal post without involving the use of a transfer sheet. In this way, the weight of the secondary battery is effectively reduced, and the energy density of the battery is improved. Further, safety risks to the electrode assembly caused by welding slag from the conventional ultrasonic welding or laser welding of the tab and the terminal post are avoided, so safety performance of the secondary battery is improved. In addition, through the riveting approach provided in the embodiments of the disclosure, the situation of tab cracking when welding the tab and the terminal post in the related art is effectively addressed, so the yield rate of the secondary battery is improved, and production costs of the secondary battery are lowered.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 illustrates an electric apparatus according to an embodiment of the disclosure.
FIG. 2 illustrates an electrode assembly according to an embodiment of the disclosure.
FIG. 3 is a bottom view illustrating a top cover and structures thereon according to an embodiment of the disclosure.
FIG. 4 is a front view illustrating the top cover and the structures thereon according to an embodiment of the disclosure.
FIG. 5 illustrates a partial structure of a secondary battery according to an embodiment of the disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

As described in the BACKGROUND section, when the tab is connected to the terminal post through a transfer sheet, the transfer sheet occupies a certain space and weight in the battery, resulting in lower energy density of the battery. When the tab is directly laser welded to the inner surface of the terminal post, the welding area of the tab is prone to cracking, and battery performance and consistency may thus be affected. In addition, in conventional production, metal debris may be easily generated during the process of connecting the tab to the terminal post by ultrasonic welding or laser welding, and the metal debris remains inside the electrode assembly may cause fatal safety risks to the electrode assembly.

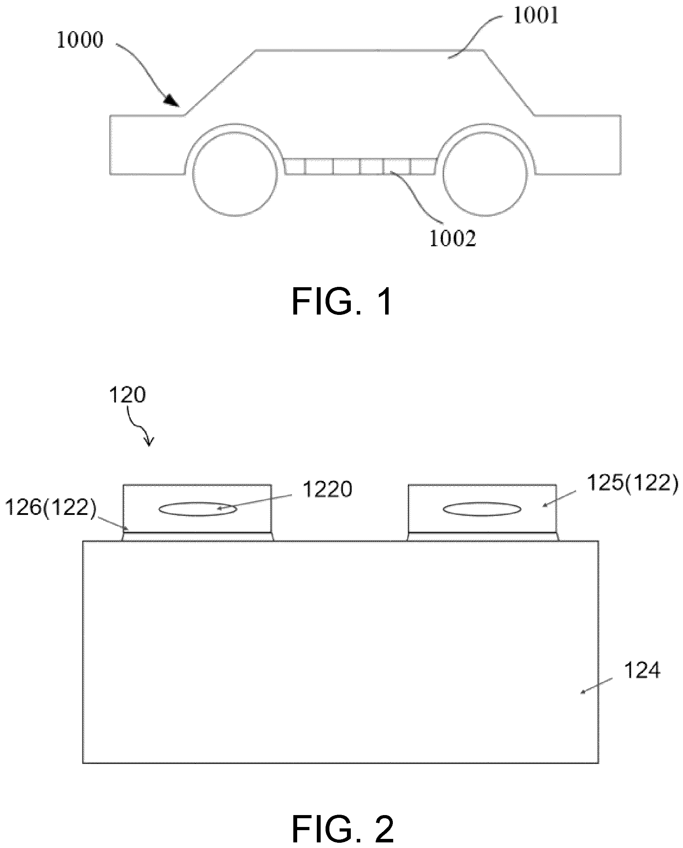

The disclosure provides an electronic device 1000. For the convenience of explanation, the following embodiments are described by taking the electronic device 1000 as a vehicle. Referring to FIG. 1, a battery pack 1002 is disposed inside the vehicle, and the battery pack 1002 may be disposed at a bottom portion, a front portion, or a rear portion of a vehicle body 1001. The battery pack 1002 may be used for power supply to the vehicle, for example, the battery pack 1002 may act as an operating power source of the vehicle. A working portion of the electronic device 1000 is electrically connected to the battery pack 1002 to obtain power support. The vehicle may be but not limited to a fuel vehicle, a gas vehicle, or a new energy vehicle, and the new energy vehicle may be a pure electric vehicle, a hybrid vehicle, or a range-extended vehicle, etc. The working portion is the vehicle body, and the battery pack 1002 is arranged at the bottom portion of the vehicle body and provides electrical energy support for the driving of the vehicle or the operation of electrical components in the vehicle. However, in other embodiments, the electronic device 1000 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion may be a unit component that can obtain the electric energy of the battery pack 1002 and perform corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic device 1000 is not particularly limited in the embodiments of the disclosure.

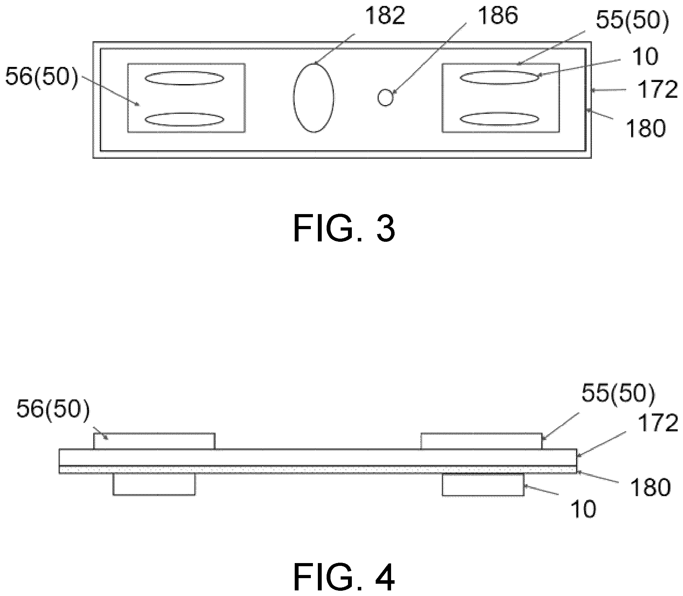

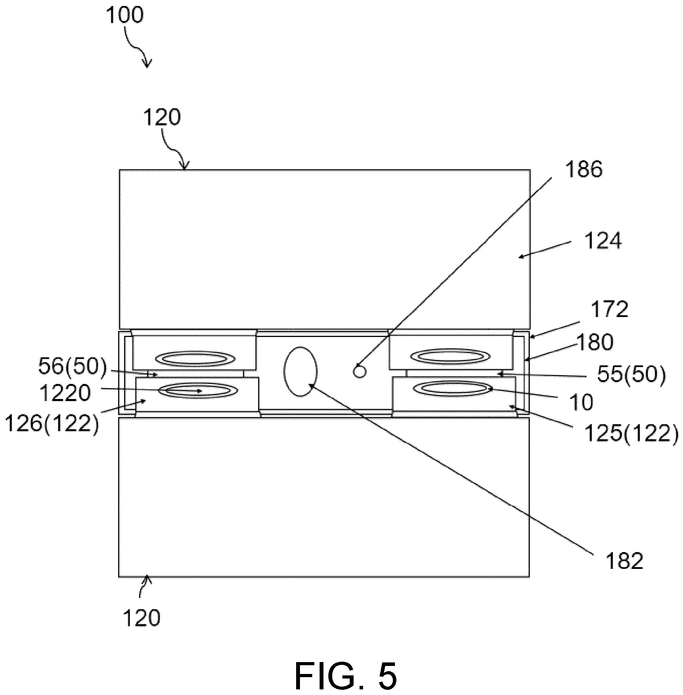

FIG. 2 illustrates an electrode assembly 120 according to an embodiment of the disclosure. FIG. 3 is a bottom view illustrating a top cover 172 and structures thereon according to an embodiment of the disclosure (i.e., illustrating an inner side of the cover plate 172 facing the electrode assembly 120). FIG. 4 is a front view illustrating the top cover 172 and the structures thereon according to an embodiment of the disclosure. FIG. 5 illustrates a partial structure of a secondary battery 100 according to an embodiment of the disclosure. FIG. 5 shows the top cover 172 and two electrode assemblies 120 being unfolded to rivet tabs 122 to terminal posts 50 and shows the top cover 172 from a bottom view. After the riveting is completed, the tabs 122 are bent at the positions where they are connected to a cell body 124, so that the two electrode assemblies 120 are combined and bundled together and then placed into a battery outer casing.

The secondary battery 100 includes the battery outer casing, the electrode assemblies 120, the terminal posts 50, and the battery outer casing includes the top cover 172, an end wall, and a side wall surrounding the end wall. As long as a stable sealing and electrical connection relationship can be formed, connection between the end wall and the side wall may be achieved in a variety of ways, such as integral stamping, integral casting, or separate welding. The surrounding of the side wall is not limited and may be in the form of a circular cylinder shape or a prismatic cylinder shape, or the side wall may also surround the end wall along any other closed loop contour that can be matched with the end wall. An accommodating cavity is formed inside the battery outer casing for accommodating the electrode assemblies 120, electrolyte, and other necessary battery components. Specifically, a diameter of the battery outer casing may be determined according to a specific size of the electrode assemblies 120. The battery outer casing may be made of various materials, such as copper, iron, aluminum, steel, aluminum alloy, etc. In order to prevent the battery outer casing from rusting during long-term use, a surface of the battery outer casing may also be plated with a layer of anti-rust material such as metal nickel.

The electrode assemblies 120 are accommodated in the battery outer casing, and the electrode assemblies 120 are components in the secondary battery 100 where electrochemical reactions occur. One or more electrode assemblies 120 may be included within the battery outer casing. Each electrode assembly 120 is a wound or stacked electrode assembly and includes a laminated and/or wound positive terminal sheet, a first separator, a negative terminal sheet, and a second separator. The positive terminal sheet includes a positive current collector and a positive active material layer coated on the positive current collector. A first coated region coated with the positive active material layer and a first uncoated region without the positive active material layer are formed on the positive current collector. The first coated region and the first uncoated region are arranged in a height direction of the electrode assembly 120. The first uncoated region extends beyond the separator towards one end in a height direction of the secondary battery 100 and forms a bent positive tab 125. The negative terminal sheet includes a negative current collector and a negative active material layer coated on the negative current collector. A second coated region coated with the negative active material layer and a second uncoated region without the negative active material layer are formed on the negative current collector. The second coated region and the second uncoated region are arranged in the height direction of the electrode assembly 120. The second uncoated region extends beyond the separator as well towards one end in the height direction of the secondary battery 100 and forms a bent negative tab 126. The first separator and the second separator are arranged between the positive terminal sheet and the negative terminal sheet to isolate the positive active material layer from the negative active material layer. Taking a lithium-ion secondary battery 100 as an example, a material of the positive current collector may be aluminum, and the positive active material layer includes a positive active material, which may be lithium cobalt oxide, lithium iron phosphate, ternary lithium, or lithium manganese oxide, etc. A material of the negative electrode current collector may be copper. The negative active material layer includes a negative active material, which may be carbon or silicon, etc. A base material of the first separator and the second separator may be polypropylene (PP) or polyethylene (PE), etc. In order to protect and insulate a cell, an insulating film may also be wrapped around the exterior of the cell, and the insulating film may be synthesized from PP, PE, PET, PVC, or other high molecular polymer materials.

Further, in the disclosure, the positive tab 125 and the negative tab 126 face and are electrically connected to a positive terminal post 55 and a negative terminal 56 post on the top cover 172, respectively. The top cover 172 is sealed and mounted on the side wall of the battery outer casing. An outer edge shape of the top cover 172 corresponds to a shape of a side wall opening, and a mounting approach of the top cover 172 includes but not limited to mechanical sealing or welding sealing.

Referring to FIG. 2 to FIG. 5, an embodiment of the disclosure provides a secondary battery 100. The secondary battery 100 includes the battery outer casing and the electrode assemblies 120 accommodated in the battery outer casing, and the battery outer casing includes the top cover 172 and the terminal posts 50 disposed on the top cover 172. Each electrode assembly 120 includes the cell body 124 and the tab 122 protruding from the cell body 124, and a riveting hole 1220 is provided on the tab 122. A rivet 10 is connected to the terminal post 50 and penetrates through the riveting hole 1220 to rivet the terminal post 50 and the tab 122. In the embodiments of the disclosure, the rivet 10 is used to rivet the tab 122 and the terminal post 50 without involving the use of a transfer sheet. In this way, a weight of the secondary battery 100 may be effectively reduced, and energy density of the battery is improved. Further, safety risks to the electrode assembly 120 caused by welding slag from conventional ultrasonic welding or laser welding of the tab and the terminal post may be avoided, so safety performance of the secondary battery 100 is improved. In addition, through the riveting approach provided in the embodiments of the disclosure, the situation of tab cracking when welding the tab and the terminal post in the related art may be effectively addressed, so the yield rate of the secondary battery 100 is improved, and production costs of the secondary battery 100 are lowered.

Referring to FIG. 3 to FIG. 5, the rivet 10 is disposed on a side of the terminal post 50 facing the electrode assembly 120, so as to penetrate through the riveting hole 1220 on the tab 122 of the electrode assembly 120 and to be riveted to the tab 122. The terminal posts 50 and the rivets 10 may be an integrally formed member. The rivet may also be connected onto the terminal post 50 through other processes (e.g., welding). In such case, weld slag poses no concern because this connection occurs prior to assembly with the electrode assembly 120, thus preventing residual slag from remaining inside the battery outer casing and affecting the electrode assembly 120. The terminal posts 50 include the positive terminal post 55 and the negative terminal post 56, and the tabs 122 includes the positive tab 125 and the negative tab 126. The positive terminal post 55 is riveted to the positive tab 125 through the rivet 10, and the negative terminal post 56 is riveted to the negative tab 126 through another rivet 10. The battery outer casing may accommodate one or more (for example but not limited to two as shown in FIG. 5) electrode assemblies 120, the terminal posts 50 are connected to a corresponding number of rivets 10, thereby connecting to the tabs 122 of the one or more electrode assemblies 120.

Referring to FIG. 3, in a direction projecting from the electrode assembly 120 to the terminal posts 50, a shape of an outer boundary of the rivet 10 is one or a combination of circle, ellipse, square, rectangle, diamond, and triangle. The rivet 10 may also be other shapes, a shape of the riveting hole 1220 on the tab 122 matches with the rivet 10. Referring to FIG. 5, the rivet 10 is a hollow structure, and an edge of the rivet 10 folds outward after penetrating through the riveting hole 1222 to secure the tab 122. The rivet 10 may also be a staple-like solid structure, using axial force to thicken a protruding nail stem after penetrating through the riveting hole 1220 and form a nail head to secure the tab 122.

In other embodiments, an edge region of the rivet 10 may be welded (e.g., laser welding or resistance welding) together with the terminal post 50 and the tab 122 to enhance its riveting strength.

The positive terminal sheet, the negative terminal sheet, and the separator are wound (or stacked) and hot-pressed to form the electrode assembly 120. After hot-pressing (or hot-press matching), the electrode assembly 120 first undergoes ultrasonic pre-welding for tab 122 shaping, and after the tab 122 is shaped, the riveting hole 1220 matching the rivet 10 is opened on the tab 122. After the riveting hole 1220 on the tab 122 is opened, the riveting hole 1220 on the tab 122 is fitted onto the rivet 10 connected to the terminal post 50 of the top cover 172. The corresponding riveting operation is then performed to connect the electrode assembly 120 with the top cover 172 through riveting. Lower plastic 180 is located on an inner side of the top cover 172, and the lower plastic 180 is made of an insulation material to provide insulation for the electrode assembly 120. An explosion-proof valve 182 is disposed on the top cover 172 for the venting of the secondary battery 100. During venting, gas can break through the explosion-proof valve 182, so explosion of the secondary battery 100 is avoided, and the safety performance of the secondary battery 100 is improved. A liquid-injecting hole 186 is located on the top cover 172. After the structure shown in FIG. 5 is combined together and then placed into the battery outer casing, electrolyte is injected into the secondary battery 100 through the liquid-injecting hole 186.

The embodiments of the disclosure also provide a battery pack 1002 including the secondary battery 100 according to any one of the above, and the battery pack 1002 may have the beneficial effects described above regarding the secondary battery 100.

The embodiments of the disclosure also provide an electronic device 1000 including the battery pack 1002 described above, and the electronic device 1000 may have the beneficial effects described above regarding the secondary battery 100 and the battery pack 1002.

## Claims

1. A secondary battery (100), **characterised by** comprising:
a top cover (172) and a terminal post (50) disposed on the top cover (172);
an electrode assembly (120) comprising a cell body (124) and a tab (122) protruding from the cell body (124), wherein a riveting hole (1220) is provided on the tab (122); and
a rivet (10) connected to the terminal post (50) and penetrating through the riveting hole (1220) to rivet the terminal post (50) and the tab (122).

2. The secondary battery (100) according to claim 1, wherein the rivet (10) is disposed on a side of the terminal post (50) facing the electrode assembly (120).

3. The secondary battery (100) according to claim 1, wherein the terminal post (50) and the rivet (10) are an integrally formed member.

4. The secondary battery (100) according to claim 1, wherein the terminal post (50) comprises a positive terminal post (55) and a negative terminal post (56), the tab comprises a positive tab (125) and a negative tab (126), the positive terminal post (55) is riveted to the positive tab (125) through the rivet (10), and the negative terminal post (56) is riveted to the negative tab (126) through another rivet (10).

5. The secondary battery (100) according to claim 1, wherein the secondary battery (100) comprises one or more electrode assemblies (120), and the terminal post (50) is connected to the corresponding rivet (10), thereby connecting to the corresponding tab (122) of the one or more electrode assemblies (120).

6. The secondary battery (100) according to claim 1, wherein the rivet (10) is a solid structure or a hollow structure, and in a direction projecting from the electrode assembly (120) to the terminal post (50), a shape of an outer boundary of the rivet (10) is one or a combination of circle, ellipse, square, rectangle, diamond, and triangle.

7. The secondary battery (100) according to claim 1, wherein an edge region of the rivet (10) is welded together with the terminal post (50) and the tab.

8. The secondary battery (100) according to claim 1, wherein the electrode assembly (120) is a wound or stacked electrode assembly (120).

9. A battery pack (1002), comprising the secondary battery (100) according to any one of claims 1-8.

10. An electronic device (1000), comprising the battery pack (1002) according to claim 9.
